# EUROPÄISCHE PATENTSCHRIFT

(11) **EP 4 268 002 B1**
(45) Veröffentlichungstag und Bekanntmachung des Hinweises auf die Patenterteilung: **08.10.2025**
(21) Anmeldenummer: 21839360.1
(22) Anmeldetag: 10.12.2021
(51) Int. Cl.: G02B 7/02, G06K 7/10

(54) **VORSATZOPTIK, SYSTEM UND VERFAHREN ZUR VERWENDUNG EINER VORSATZOPTIK**
ADD-ON LENS SYSTEM, SYSTEM AND METHOD FOR USING AN ADD-ON LENS SYSTEM
SYSTÈME DE LENTILLE COMPLÉMENTAIRE, SYSTÈME ET PROCÉDÉ D'UTILISATION D'UN SYSTÈME DE LENTILLE COMPLÉMENTAIRE

(30) Priorität: 22.12.2020 DE 102020134734
(43) Veröffentlichungstag der Anmeldung: 01.11.2023
(73) Patentinhaber: IOSS Intelligente optische Sensoren & Systeme GmbH, 78315 Radolfzell (DE)
(72) Erfinder: RICHTER, Harald, 78315 Radolfzell (DE); GÄSSLER, Joachim, 78166 Donaueschingen (DE); KONZ, Christian, 78337 Öhningen-Wangen (DE)
(74) Vertreter: Thum & Partner I Thum Mötsch Weickert Patentanwälte PartG mbB
(86) Internationale Anmeldenummer: PCT/EP2021/085252
(87) Internationale Veröffentlichungsnummer: WO 2022/135980

(56) Entgegenhaltungen:
- EP-A2- 3 591 568
- WO-A1-2006/065619
- DE-A1- 102007 043 609
- US-A1- 2006 091 214
- US-B1- 6 595 422

## Beschreibung

### Stand der Technik

Die Erfindung betrifft eine passive Vorsatzoptik nach Anspruch 1, ein System nach Anspruch 12 und ein Verfahren zur Verwendung einer passiven Vorsatzoptik nach Anspruch 13.

Aus dem Stand der Technik, beispielsweise der EP 3 591 568 A2, ist bereits eine aktive Vorsatzoptik für Codelesegeräte bekannt, welche über eine eigene aktive Beleuchtungsvorrichtung, insbesondere über eigene Lichtquellen, verfügt.

Passive Vorsatzoptiken sind beispielsweise aus der US 6 595 422 B1 bekannt.

Die Aufgabe der Erfindung besteht insbesondere darin, eine gattungsgemäße Vorrichtung mit verbesserten Eigenschaften hinsichtlich einer Konstruktion bereitzustellen. Die Aufgabe wird erfindungsgemäß durch die Merkmale der Ansprüche 1, 12 und 13 gelöst, während vorteilhafte Ausgestaltungen und Weiterbildungen der Erfindung den Unteransprüchen entnommen werden können.

### Vorteile der Erfindung

Die Erfindung betrifft eine passive Vorsatzoptik zur Verwendung mit zumindest einer Lichtquelleneinheit eines Codelese- und/oder Codeverifikationsgeräts, im Folgenden auch verallgemeinert als Bildaufnehmer bezeichnet, mit einer Optikeinheit, wobei die Optikeinheit zumindest eine Linse zur Anderung eines Abbildungsstrahlengangs des Codelese- und/oder Codeverifikationsgeräts aufweist.

Durch eine derartige Ausgestaltung kann eine Konstruktion vorteilhaft verbessert, insbesondere vereinfacht, werden. Zudem kann eine Montage und/oder eine Herstellung einer Vorsatzoptik vereinfacht werden, wodurch wiederum Kosten, insbesondere Herstellungskosten, gesenkt werden können. Des Weiteren kann eine Effizienz, insbesondere eine Montage- und/oder Produkt- und/oder Arbeitseffizienz, gesteigert werden. Besonders vorteilhaft kann eine einfache Montage und/oder Demontage der Vorsatzoptik an einem Bildaufnehmer ermöglicht werden, um insbesondere zumindest einen Abbindungsstrahlengang des Bildaufnehmers zu ändern. Zudem kann eine passive Vorsatzoptik bereitgestellt werden, wobei gerade auf aktive Einheiten, wie beispielsweise Lichtquellen, verzichtet werden kann, da die Vorsatzoptik zu einer Verwendung mit zumindest einer Lichtquelleneinheit des Bildaufnehmers ausgebildet ist. Darüber hinaus kann die Vorsatzoptik möglicherweise modular aufgebaut sein und insbesondere zur Verwendung mit der Lichtquelleneinheit des Bildaufnehmers anpasst werden. Vorteilhaft kann die Vorsatzoptik für unterschiedliche Aufnahmebedingungen angepasst und einem Benutzer bereitgestellt werden.

Die Vorsatzoptik ist erfindungsgemäß als eine passive Vorsatzoptik, frei von aktiven Einheiten, wie beispielsweise Beleuchtungsquellen, ausgebildet. In einem montierten Zustand bildet die Vorrichtung bevorzugt eine Unterbaugruppe eines Codelese- und/oder Codeverifikationssystems, welches das Codelese- und/oder Codeverifikationsgerät, aufweist.

Erfindungsgemäß weist der Bildaufnehmer zumindest die Lichtquelleneinheit auf. In einem Betriebszustand könnte die Lichtquelleneinheit Licht zur Beleuchtung eines Beleuchtungsbereichs bereitstellen. Vorteilhaft ist zumindest die Lichtquelleneinheit individuell ansteuerbar und/oder schaltbar. Insbesondere erzeugt die Lichtquelleneinheit das bereitgestellte Licht in dem Betriebszustand mit zumindest einer Lichtquelle. Die Lichtquelle und zumindest eine weitere Lichtquelle der Lichtquelleneinheit könnten parallel zueinander ausgerichtet sein. Besonders bevorzugt könnten die Lichtquelle und die weitere Lichtquelle individuell ansteuerbar und/oder schaltbar sein. In dem Betriebszustand könnten die Lichtquelle und die weitere Lichtquelle, insbesondere gleichzeitig, Licht bereitstellen. Die Lichtquelle und/oder die weitere Lichtquelle könnten unabhängig von einer Ansteuerung der jeweils anderen Lichtquelle, insbesondere der Lichtquelle und/oder der weiteren Lichtquelle, Licht zur Beleuchtung bereitstellen. Zusätzlich könnten die Lichtquelleneinheit und zumindest eine weitere Lichtquelleneinheit des Bildaufnehmers, insbesondere die Lichtquelle und zumindest die weitere Lichtquelle, in zumindest einer Gruppe schaltbar und/oder ansteuerbar sein. Es wäre auch denkbar, dass die Vorsatzoptik eine Einstellung zur Beleuchtung durch zumindest die Lichtquelleneinheit selbstständig, insbesondere automatisch, auswählt und/oder einstellt. Der Bildaufnehmer ist insbesondere dazu vorgesehen, eine Abbildung des Beleuchtungsbereichs aufzunehmen und vorteilhaft auszuwerten. Denkbar wäre, dass der Bildaufnehmer eine Kamera und/oder ein optisches Messgerät und/oder ein Kontrollgerät aufweist. Möglicherweise könnte der Bildaufnehmer Abbildungen von Objekten innerhalb des Beleuchtungsbereichs zur Ermittlung von Identifizierungsmerkmalen und/oder Messgrößen und/oder Abbildungen von Objekten zur Ausführung von Kontrollfunktionen, beispielsweise einer Vollständigkeitskontrolle, bereitstellen. Im Fall, dass der Bildaufnehmer als ein Codelese- und/oder Codeverifikationsgerät ausgebildet ist, ist der Bildaufnehmer vorteilhaft dazu vorgesehen, zumindest einen in dem Beleuchtungsbereich angeordneten Code zu lesen und/oder zu verifizieren.

Die Vorsatzoptik ist zu einer Verwendung mit dem Bildaufnehmer, mit zumindest der Lichtquelleneinheit, vorgesehen. Insbesondere könnte die Lichtquelleneinheit in dem montierten Zustand und in einem Betriebszustand durch die Vorsatzoptik den Beleuchtungsbereich beleuchten. Vorteilhaft weist die Vorsatzoptik zumindest einen Lichtaufnahmebereich auf, welcher insbesondere dazu vorgesehen ist, das von der Lichtquelleneinheit bereitgestellte Licht aufzunehmen und vorzugsweise ungehindert passieren zu lassen. Besonders vorteilhaft weist die Vorsatzoptik zumindest einen Lichtbearbeitungsbereich auf, welcher insbesondere dazu vorgesehen ist, das von der Lichtquelleneinheit bereitgestellte Licht zu bearbeiten und damit den Beleuchtungsbereich zu beleuchten. Vorzugsweise ist der Lichtbearbeitungsbereich entlang eines Beleuchtungsstrahlengangs des bereitgestellten Lichts nach dem Lichtaufnahmebereich angeordnet. Die Optikeinheit könnte das von der Lichtquelleneinheit bereitgestellte Licht, vorteilhaft in dem Lichtbearbeitungsbereich, bearbeiten, wobei das bereitgestellte Licht insbesondere durch den Lichtaufnahmebereich in den Lichtbearbeitungsbereich dringt.

Die Vorsatzoptik ist eine passive Vorsatzoptik. Dabei ist die passive Vorsatzoptik frei von aktiven Einheiten wie beispielsweise eigenen Lichtquellen und/oder schaltbaren optischen Einheiten. Die passive Vorsatzoptik ist mit der Lichtquelleneinheit verwendbar. Die Vorsatzoptik könnte von dem Bildaufnehmer abnehmbar sein. Beispielsweise könnte die Vorsatzoptik durch eine Schnappverbindung und/oder Schraubverbindung lösbar an dem Bildaufnehmer befestigt sein. Bevorzugt ist die Vorsatzoptik auf den Bildaufnehmer aufsteckbar. Ein Verfahren zur Verwendung der Vorsatzoptik mit dem Bildaufnehmer könnte aus mehreren Verfahrensteilschritten bestehen. In einem ersten Verfahrensteilschritt des Verfahrens wird die Vorsatzoptik mit dem Bildaufnehmer verbunden. In dem montierten Zustand ist die Vorsatzoptik mit dem Bildaufnehmer verbunden, insbesondere fixiert.

Erfingungsgemäß ist die Vorsatzoptik dazu vorgesehen, einen Abbildungsstrahlengang des Bildaufnehmers zu ändern. In einem zweiten Verfahrensteilschritt des Verfahrens wird der Abbildungsstrahlengang durch die Vorsatzoptik geändert. Der Abbildungsstrahlengang ist insbesondere ein geometrischer Verlauf eines Strahlengangs des Bildaufnehmers, welcher durch die Vorsatzoptik hindurchläuft und mittels welchem der Bildaufnehmer die Abbildung, vorzugsweise innerhalb des Beleuchtungsbereichs, aufnimmt und vorteilhaft auswertet. Insbesondere weist der Bildaufnehmer eine Detektoreinheit zur Aufnahme der Abbildung mittels des Abbildungsstrahlengangs auf. Insbesondere befindet sich die Linse entlang des Abbildungsstrahlengangs zwischen der Detektoreinheit und dem Beleuchtungsbereich und/oder Abbildungsbereich.

Die Optikeinheit könnte mehrere, dem Fachmann bekannte, passive optische Einheiten zur Bereitstellung der Beleuchtung und/oder zur Beeinflussung des Abbildungsstrahlengangs aufweisen, wie beispielsweise die Linse und/oder einen Spiegel und/oder einen Filter und/oder einen optischen Lichtleiter, wie beispielsweise einen Bildleiter und/oder ein Faserbündel. In dem montierten Zustand ändert die Optikeinheit vorzugsweise den Abbildungsstrahlengang des Bildaufnehmers. Die dazu vorgesehene Linse könnte beispielsweise eine Zerstreuungslinse oder vorteilhaft eine Sammellinse sein. Bei der Sammellinse könnte es sich um eine bikonvexe oder plankonvexe oder konkavkonvexe Linse handeln. Insbesondere ist die Linse sphärisch oder asphärisch oder weist eine Freiform-Geometrie auf. In dem montierten Zustand und insbesondere in dem Betriebszustand verläuft der Abbildungsstrahlengang durch die Linse. Die Optikeinheit könnte eine Linsenaufnahme aufweisen, in welche die Linse einsetzbar ist.

Die Vorsatzoptik könnte ein Gehäuse aufweisen. Das Gehäuse könnte einen Innenraum zumindest teilweise umgeben und/oder definieren. In dem Innenraum könnte zumindest teilweise die Optikeinheit angeordnet sein. In dem montierten Zustand ist die Linsenaufnahme an dem Gehäuse kraft- und/oder formschlüssig fixiert, beispielsweise mittels einer Steckverbindung und/oder einer Drehverbindung und/oder einer Schraubverbindung und/oder einer Rastverbindung der Vorsatzoptik. Die Vorsatzoptik und/oder der Bildaufnehmer könnten beispielsweise zumindest teilweise und/oder zu einem Großteil aus einem Mineral und/oder einem Metall und/oder einem Kunststoff und/oder einem Verbundmaterial bestehen. Unter dem Ausdruck "zu einem Großteil" sollen dabei beispielsweise zumindest 55 %, vorteilhaft zumindest 65 %, vorzugsweise zumindest 75 %, besonders bevorzugt zumindest 85 % und besonders vorteilhaft höchstens 95 % eines Volumen- und/oder Massenanteils verstanden werden. Hierbei könnte die Vorsatzoptik zumindest teilweise und vorzugsweise zumindest zu einem Großteil aus demselben Material bestehen wie der Bildaufnehmer. Die Vorsatzoptik könnte zumindest teilweise und/oder zu einem Großteil mittels eines Spritzgießprozesses oder bevorzugt mittels eines 3D-Druckprozesses herstellbar sein.

Unter "vorgesehen" soll hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Die Vorsatzoptik wird zur Verwendung mit dem Codelese- und/oder Codeverifikationsgerät mit der Optikeinheit vorgeschlagen, wobei die Optikeinheit zumindest die Linse zur Änderung eines Abbildungsstrahlengangs des Codelese- und/oder Codeverifikationsgeräts aufweist. Dadurch kann eine Konstruktion einer Vorsatzoptik angepasst auf ein Codelese- und/oder Codeverifikationsgerät vorteilhaft verbessert, insbesondere vereinfacht, werden. Zudem kann die Vorsatzoptik ohne aktive Einheiten des Codelese- und/oder Codeverifikationsgeräts, wie beispielsweise einer Lichtquelleneinheit des Codelese- und/oder Codeverifikationsgeräts, verwendet werden.

Vorzugsweise ist die Vorsatzoptik eine telezentrische Vorsatzoptik zur Erzeugung eines zumindest annäherungsweise telezentrischen Strahlengangs. Erfindungsgemäß ist die Linse dazu vorgesehen, einen divergenten Abbildungsstrahlengang des Bildaufnehmers, insbesondere des Codelese- und/oder Codeverifikationsgeräts, in einen zumindest im Wesentlichen telezentrischen Abbildungsstrahlengang zu ändern, welcher einen Abbildungsbereich definiert. Durch einen telezentrischen Abbildungsstrahlengang können kleinste Störungen und/oder Defekte und/oder Unebenheiten in einer Oberfläche eines Objekts abgebildet werden. Zudem kann die Vorsatzoptik beispielsweise zu Objektvermessungen einsetzbar sein, da sich eine Objektgröße des Objekts vorteilhaft nur sehr geringfügig verändert, wenn ein Objektabstand des Objekts variiert wird.

Der Abbildungsbereich könnte sich von dem Beleuchtungsbereich unterscheiden, insbesondere könnte der Abbildungsbereich kleiner und/oder größer sein als der Beleuchtungsbereich. Vorteilhaft unterscheidet sich eine Abmessung des Abbildungsbereichs um insbesondere höchstens 30 %, vorteilhaft um höchstens 10 %, vorzugsweise um höchstens 5 % und besonders bevorzugt um höchstens 1 % von einer Abmessung des Beleuchtungsbereichs. Besonders bevorzugt liegt der Abbildungsbereich in dem Beleuchtungsbereich und ist damit ein Teilbereich des Beleuchtungsbereichs. Zusätzlich könnte der Abbildungsbereich zumindest im Wesentlichen identisch zu dem Beleuchtungsbereich sein. Insbesondere ist der Bildaufnehmer dazu vorgesehen, eine Abbildung des Abbildungsbereichs, welcher vorteilhaft von der Lichtquelleneinheit beleuchtet wird, aufzunehmen und vorzugsweise auszuwerten. Vorzugsweise verläuft der telezentrische Abbildungsstrahlengang zumindest im Wesentlichen parallel zu einer optischen Achse des Bildaufnehmers. Ein telezentrischer Strahlengang, insbesondere der telezentrische Abbildungsstrahlengang, könnte um insbesondere höchstens 5 %, vorteilhaft um höchstens 2 %, vorzugsweise um höchstens 1 % und besonders bevorzugt um höchstens 0,5 % von der optischen Achse abweichen. Es wäre denkbar, dass eine Eintrittspupille des Bildaufnehmers und/oder der Detektoreinheit, welche insbesondere als eine Aperturblende des Bildaufnehmers fungiert, in einer Brennebene der Linse angeordnet ist.

Um eine modulare Vorsatzoptik bereitzustellen, welche insbesondere zur Verwendung mit einer Lichtquelleneinheit eines Bildaufnehmers anpassbar ist, wird vorgeschlagen, dass die Vorsatzoptik einen Satz von Halteeinheiten aufweist, welche jeweils zumindest Teile einer Lichteinheit der Vorsatzoptik halten, wobei die Optikeinheit eine Kopplungseinheit aufweist und die Halteeinheiten des Satzes von Halteeinheiten untereinander austauschbar und mit der Kopplungseinheit verbindbar sind. Zudem kann die Vorsatzoptik derart angepasst werden, dass unterschiedliche Lichtquelleneinheiten des Bildaufnehmers mit insbesondere unterschiedlichen Geometrien verwendet werden können. Außerdem kann die Vorsatzoptik an unterschiedliche Bildfeldwinkel angepasst werden. Darüber hinaus kann durch ein einfaches Einstecken und/oder Herausziehen einer Halteeinheit in/aus ein/einem Gehäuse einer Vorsatzoptik, eine einfache und/oder zeitsparende und/oder komfortable Montage und/oder Demontage ermöglicht werden. Die Halteeinheit könnte in das Gehäuse einsetzbar, beispielsweise einsteckbar, sein. Vorzugsweise fixiert die Kopplungseinheit die Halteeinheit an einer Innenwandung des Gehäuses. In dem montierten Zustand könnte die Halteeinheit einen zumindest formschlüssigen Kontakt mit dem Bildaufnehmer aufweisen. Die Halteeinheit könnte zumindest eine Ausnehmung aufweisen, welche insbesondere dazu vorgesehen ist, eine Durchlassverbindung für das von der Lichtquelleneinheit bereitgestellte Licht zu bilden. Vorteilhaft ist die Ausnehmung in einer Größe und/oder Form und/oder Abmessung an zumindest die Lichtquelle angepasst.

Erfindungsgemäß weist die passive Vorsatzoptik eine Lichteinheit auf, welche dazu vorgesehen, von zumindest der Lichtquelleneinheit des Codelese- und/oder Codeverifikationsgeräts bereitgestelltes Licht in Richtung des Abbildungsbereichs umzulenken. Damit kann eine Abbildungsqualität einer Abbildung durch einen Bildaufnehmer verbessert werden und zwar insbesondere dadurch, dass ein Beleuchtungsbereich auf konstruktiv einfache Weise beleuchtet werden kann. Darüber hinaus kann trotz einer koaxial eingespeisten Beleuchtung von einer Lichtquelleneinheit ein Abbildungsbereich und/oder ein Beleuchtungsbereich vorteilhaft beleuchtet werden. Zudem kann eine bevorzugte Hellfeldbeleuchtung bereitgestellt werden. Vorzugsweise weist die Lichteinheit dem Fachmann bekannte, passive optische Elemente zur Beeinflussung des bereitgestellten Lichts, wie beispielsweise einen Spiegel und/oder einen Filter und/oder einen optische Wellenleiter, auf. Die Lichteinheit könnte irreversibel mit der Halteeinheit verbunden sein. Alternativ könnte die Lichteinheit austauschbar und vorteilhaft in die Halteeinheit einsetzbar und/oder aus der Halteeinheit herausnehmbar sein.

Es wird vorgeschlagen, dass die Lichteinheit einen Strahlteiler aufweist, welcher zur Ausrichtung zumindest eines Beleuchtungsstrahlengangs des bereitgestellten Lichts, insbesondere der Lichtquelleneinheit, vorgesehen ist. Damit kann ein von der Lichtquelleneinheit bereitgestelltes Licht vorteilhaft ausgerichtet und folglich ein bevorzugter Beleuchtungsstrahlengang bereitgestellt werden. Zudem kann eine Beleuchtungsqualität eines Beleuchtungsbereichs auf konstruktiv einfache Weise verbessert werden. Darüber hinaus kann ein Aufbau einer Optikeinheit, welche die Lichteinheit aufweist, konstruktiv vereinfacht werden.

Vorzugsweise ist der Strahlteiler dazu vorgesehen, von dem Beleuchtungsbereich reflektiertes Licht zumindest teilweise, insbesondere zu einem Intensitätsbruchteil von zumindest 30 %, vorteilhaft zumindest 50 %, vorzugsweise zumindest 60 % und besonders bevorzugt von zumindest 80 %, durchzulassen, insbesondere das reflektierte Licht frei von Streuprozessen und/oder Reflexionen passieren zu lassen. Der Strahlteiler ist vorteilhaft als ein Strahlteilerwürfel ausgebildet. Der Strahlteilerwürfel ist insbesondere ein kubisches Element, welches zumindest einen halbdurchlässigen Spiegel aufweist, welcher beispielsweise eine Seitenfläche des kubischen Elements und bevorzugt eine Diagonalfläche des kubischen Elements bildet.

Die Optikeinheit, vorzugsweise die Halteeinheit, weist zumindest einen Aufnahmebereich zur zumindest formschlüssigen Aufnahme des Strahlteilers auf. Der Strahlteilerwürfel könnte in den Aufnahmebereich reversibel einsetzbar sein. Beispielsweise könnte der Aufnahmebereich zumindest einen hervorstehenden Rand und/oder zumindest einen Rahmen und/oder zumindest eine als ein Negativ der/des Baueinheit/Bauelements ausgebildete Vertiefung aufweisen. Insbesondere trägt der Strahlteiler zur Erzeugung eines insbesondere gerichteten Strahlengangs bei, wobei vorzugsweise der Beleuchtungsstrahlengang von der Lichtquelleneinheit des Bildaufnehmers über Umlenkung am Strahlteiler zum Beleuchtungsbereich führt und der Abbildungsstrahlengang vom Beleuchtungsbereich ausgehend den Strahlteiler passiert und zu der Detektoreinheit verläuft.

Es wäre denkbar, dass die Lichteinheit eine weitere Linse aufweist, durch welche der Strahlteiler den Beleuchtungsstrahlengang leitet. Vorzugsweise weist die Lichteinheit die Linse auf und der Strahlteiler leitet den Beleuchtungsstrahlengang durch die Linse. Damit kann eine kompakte und/oder vereinfachte Vorsatzoptik bereitgestellt werden. Zudem kann auf zusätzliche Linsen zur Änderung eines Beleuchtungsstrahlengangs verzichtet und damit vorteilhaft eine Produkteffizienz gesteigert werden. Insbesondere können Produkt- und/oder Herstellungskosten gesenkt werden.

Insbesondere sind die Optikeinheit und die Lichteinheit zumindest teilweise einstückig ausgebildet. Unter "einstückig" soll zumindest stoffschlüssig verbunden verstanden werden, beispielsweise durch einen Klebeprozess, einen Schweißprozess, einen Anspritzprozess und/oder einen anderen, einem Fachmann als sinnvoll erscheinenden Prozess, und/oder in einem Stück geformt verstanden werden, wie beispielsweise durch eine Herstellung in einem Ein- oder Mehrkomponentenspritzverfahren und/oder durch eine Herstellung aus einem Guss und/oder aus einem Stanzverfahren aus einem einzelnen Rohling. Möglicherweise könnte unter einstückig auch einteilig verstanden werden. Insbesondere beleuchtet das bereitgestellte Licht den Abbildungsbereich durch die Linse. Die Linse könnte sich entlang des Beleuchtungsstrahlengangs zwischen dem Strahlteiler und dem Beleuchtungsbereich und/oder Abbildungsbereich befinden. Bei dem Beleuchtungsstrahlengang könnte es sich um einen divergenten oder konvergenten oder diffusen Beleuchtungsstrahlengang handeln. Insbesondere könnte der Beleuchtungsstrahlengang zwischen dem Strahlteiler und der Linse diffus verlaufen. Denkbar wäre auch, dass der Beleuchtungsstrahlengang den Abbildungsbereich koaxial beleuchtet.

Vorzugsweise ist die Lichteinheit dazu vorgesehen, einen zumindest im Wesentlichen telezentrischen Beleuchtungsstrahlengang bereitzustellen. Damit kann eine vorteilhafte Beleuchtung eines Abbildungsbereichs ermöglicht und zwar kann ein telezentrischer Beleuchtungsstrahlengang bereitgestellt werden, mittels welchem kleinste Störungen und/oder Defekte und/oder Unebenheiten in einer Oberfläche eines Objekts beleuchtet und/oder mit einem Bildaufnehmer abgebildet werden können. Insbesondere verläuft der telezentrische Beleuchtungsstrahlengang zumindest im Wesentlichen parallel zu dem telezentrischen Abbildungsstrahlengang. Der diffuse Beleuchtungsstrahlengang könnte durch die Linse gehen. Vorzugsweise ändert die Linse den diffusen Beleuchtungsstrahlengang in einen zumindest im Wesentlichen telezentrischen Beleuchtungsstrahlengang.

Um eine effizientere Beleuchtung und eine kompaktere Konstruktion einer Vorsatzoptik bereitzustellen, wird vorgeschlagen, dass die Lichteinheit einen Diffusor aufweist, welcher entlang des Beleuchtungsstrahlengangs vor dem Strahlteiler angeordnet ist. Damit kann ein Abbildungsbereich trotz möglicher Unebenheiten und/oder leichter Rauigkeiten und/oder Defekte auf einer Oberfläche eines Objekts vorteilhaft gleichmäßig beleuchtet werden, wobei ein Beleuchtungsstrahlengang eines bereitgestellten Lichts vorteilhaft in einem von einem senkrechten Einfallswinkel abweichenden Einfallswinkel auf die Oberfläche des Objekts trifft. Insbesondere ist der Diffusor in dem Lichtbearbeitungsbereich angeordnet. Der Diffusor ist dazu vorgesehen, ein den Diffusor passierendes, vorzugsweise direktes, Licht, insbesondere das bereitgestellte Licht, in diffuses Streulicht, bevorzugt ein diffuses Beleuchtungslicht, umzuwandeln. Das diffuse Beleuchtungslicht ist insbesondere Licht, welches aus dem Lichtbearbeitungsbereich in Richtung des Beleuchtungsbereichs austritt und vorzugsweise noch nicht im Beleuchtungsbereich angekommen ist. Insbesondere trifft das diffuse Beleuchtungslicht auf den Strahlteiler. Vorzugsweise speist der Strahlteiler das diffuse Licht in einen koaxialen Beleuchtungsstrahlengang ein, welcher möglicherweise durch die Linse führen könnte.

Der Diffusor könnte zumindest ein transluzentes Material aufweisen und ist vorteilhaft aus einem solchen Material ausgebildet. Das transluzente Material ist insbesondere ein Material, welches ein Streumaß von beispielsweise zumindest 50 %, vorteilhaft von zumindest 70 % und besonders vorteilhaft von zumindest 90 % aufweist. Unter einem "Streumaß" eines Körpers soll insbesondere ein Verhältnis einer Streulichtintensität, vorteilhaft einer Intensität des gestreuten Lichts, auf einer Ausgangsseite des Körpers zu einer Eingangslichtintensität auf einer Eingangsseite des Körpers verstanden werden.

Entlang des Beleuchtungsstrahlengangs könnte nach dem Diffusor, insbesondere auf einer dem Diffuser gegenüberliegenden Seite des Strahlteilers, ein Absorptionselement der Lichteinheit angeordnet sein. Vorteilhaft bildet das Absorptionselement eine Beschichtung einer Seitenfläche des Strahlteilers. Das Absorptionselement ist dazu vorgesehen, einen bei einer Umlenkung des von der Lichtquelle der Lichtquelleneinheit bereitgestellten Lichts und/oder des diffusen Streulichts und/oder des diffusen Beleuchtungslichts vom Beleuchtungsbereich durchgelassenen Lichtanteil zu absorbieren, um den Einfluss von unerwünschtem Licht, insbesondere Falschlicht, zu vermeiden. Das Falschlicht, insbesondere Streulicht, könnte Licht sein, welches in unerwünschte Bereiche der Vorsatzoptik und/oder des Bildaufnehmers eintritt.

Es wäre denkbar, dass die Halteeinheit eine diffus reflektierende Fläche aufweist, welche dazu vorgesehen ist, das bereitgestellte Licht zu dem Strahlteiler zu reflektieren. Die diffus reflektierende Fläche könnte an einer gespiegelten Position der Eintrittspupille des Bildaufnehmers und/oder der Detektoreinheit angeordnet sein. Alternativ und/oder zusätzlich wäre denkbar, dass die Halteeinheit eine erste Reflexionsfläche und/oder zumindest eine zweite Reflexionsfläche aufweist, welche zu einer Erhöhung einer Lichtmenge des auf die diffus reflektierende Fläche auftreffenden Lichts vorgesehen sind.

In weiteren Ausgestaltungen der Erfindung wird vorgeschlagen, dass die Lichteinheit einen Lichtleiter aufweist, welcher dazu vorgesehen ist, das bereitgestellte Licht zumindest abschnittsweise zum Abbildungsbereich zu führen. Damit kann ein bereitgestelltes Licht einer Lichtquelleneinheit eines Bildaufnehmers bei einer Verwendung mit der Vorsatzoptik von der Vorsatzoptik vorteilhaft gelenkt werden. Zudem kann ein Abbildungsbereich vorteilhaft effizient beleuchtet werden. Darüber hinaus kann mittels des Lichtleiters eine Konstruktion der Vorsatzoptik maßgeblich verbessert, insbesondere vereinfacht, werden.

Der Lichtleiter könnte in eine Öffnung der Halteeinheit reversibel einsetzbar sein. Beispielsweise könnte die Öffnung zumindest einen hervorstehenden Rand und/oder zumindest einen Rahmen und/oder zumindest eine als ein Negativ der/des Baueinheit/Bauelements ausgebildete Vertiefung aufweisen, sodass der Lichtleiter zumindest formschlüssig in der Öffnung anordenbar ist.

Vorteilhaft könnte der Lichtleiter die erste Reflexionsfläche und/oder die zweite Reflexionsfläche beleuchten. Der Lichtleiter könnte zumindest einen planen Eintrittsbereich für das bereitgestellte Licht aufweisen, welcher vorteilhaft an eine Abmessung und/oder Form und/oder Größe der Lichtquelle angepasst ist. Alternativ könnte der Lichtleiter auch von zwei planen Eintrittsbereichen Licht weiterleiten. An einer dem Eintrittsbereich abgewandten Seite könnte der Lichtleiter eine Abstrahlungsfläche für das bereitgestellte Licht aufweisen. Die Abstrahlungsfläche könnte einen Winkel von zumindest 20°, vorteilhaft 30° und vorzugsweise 45° aufweisen, sodass der Lichtleiter das bereitgestellte Licht mittels Totalreflexion in Richtung der diffus reflektierenden Fläche lenkt.

Alternativ und/oder zusätzlich könnte der Lichtleiter zumindest teilweise und/oder zu einem Großteil aus einem Mineral, beispielsweise Glas, und/oder einem Kunststoff und/oder einem Verbundmaterial bestehen. Der Lichtleiter könnte eine gebogene Form aufweisen. Der Lichtleiter könnte zumindest teilweise einteilig und vorzugsweise einstückig ausgebildet sein. Möglicherweise weist die Halteeinheit eine Blende auf, durch welche der Lichtleiter das bereitgestellte Licht zum Strahlteiler leitet. Die Blende könnte entlang des Beleuchtungsstrahlengangs vor dem Strahlteiler und nach dem Lichtleiter angeordnet sein.

Es wird vorgeschlagen, dass der Lichtleiter dazu vorgesehen ist, das bereitgestellte Licht unmittelbar in den Abbildungsbereich zu entlassen. Dadurch kann eine intensive und direkte Beleuchtung eines Abbildungsbereichs ermöglicht werden. Zudem kann das Licht störungsfrei den Abbildungsbereich beleuchten, insbesondere kann eine Verwendung von weiteren optischen Einheiten vermieden werden. Des Weiteren kann damit eine Dunkelfeldbeleuchtung bereitgestellt werden. Insbesondere entlässt der Lichtleiter das bereitgestellte Licht ohne eine vorhergehende insbesondere optische Störung des Beleuchtungsstrahlengangs in den Abbildungsbereich. Das bereitgestellte Licht könnte den Abbildungsbereich direkt beleuchten und vorteilhaft frei von einem Durchgang durch das optische Element, beispielsweise den Strahlteiler und/oder die Linse, sein.

Des Weiteren wird vorgeschlagen, dass die Lichteinheit einen weiteren Lichtleiter aufweist, welcher dazu vorgesehen ist, das bereitgestellte Licht zumindest abschnittsweise zum Abbildungsbereich zu führen. Dadurch kann eine Effizienz gesteigert und insbesondere eine intensivere Beleuchtung eines Beleuchtungsbereichs und/oder eines Abbildungsbereichs ermöglicht werden. Der weitere Lichtleiter könnte das bereitgestellte Licht von der Lichtquelle und/oder einer weiteren Lichtquelle der Lichtquelleneinheit zumindest abschnittsweise zum Abbildungsbereich führen. Alternativ und/oder zusätzlich könnte der weitere Lichtleiter das bereitgestellte Licht unmittelbar in den Abbildungsbereich entlassen.

In dem montierten Zustand und in dem Betriebszustand könnte das bereitgestellte Licht durch den Lichtleiter und durch den weiteren Lichtleiter den Abbildungsbereich und/oder den Beleuchtungsbereich beleuchten. Insbesondere führt der Beleuchtungsstrahlengang durch den Lichtleiter und/oder den weiteren Lichtleiter.

Um eine maximale Beleuchtungseffizienz eines Beleuchtungsbereichs und/oder eines Abbildungsbereichs bereitzustellen, wird vorgeschlagen, dass der Lichtleiter und der weitere Lichtleiter Licht mit unterschiedlichen Einfallswinkeln in dem Abbildungsbereich bereitstellen. Zudem kann damit eine Dunkelfeldbeleuchtung, insbesondere gerade mit unterschiedlichen Einfallswinkeln, bereitgestellt werden. Das bereitgestellte Licht könnte durch den Lichtleiter unter einem Einfallswinkel von beispielsweise zumindest 10°, vorteilhaft zumindest 20°, vorzugsweise zumindest 30° und besonders bevorzugt höchstens 70° in den Abbildungsbereich führbar sein. Der weitere Lichtleiter könnte einen weiteren Einfallswinkel von beispielsweise zumindest 5°, vorteilhaft von zumindest 10°, vorzugsweise von zumindest 20° und besonders bevorzugt von höchstens 70° für das bereitgestellte Licht bereitstellen. Insbesondere unterscheiden sich der Einfallswinkel und der weitere Einfallswinkel um beispielsweise zumindest 2°, vorteilhaft zumindest 5°, vorzugsweise zumindest 10° und besonders bevorzugt um höchstens 50° voneinander. Um eine Befestigung und/oder ein Lösen einer Optikeinheit an/von dem Bildaufnehmer zu vereinfachen, wird vorgeschlagen, dass die Vorsatzoptik eine Befestigungseinheit zur insbesondere abnehmbaren Befestigung der Optikeinheit an dem Bildaufnehmer, insbesondere dem Codelese- und/oder Codeverifikationsgerät, aufweist. Zudem kann eine Konstruktion einer Vorsatzoptik dahingehend gesteigert werden, dass die Optikeinheit auf eine effiziente und/oder schnelle Weise mit dem Bildaufnehmer verbunden und/oder von dem Bildaufnehmer gelöst werden kann. Insbesondere kann die Vorsatzoptik nur bei Bedarf auf/mit dem Bildaufnehmer befestigt werden.

Die Befestigungseinheit könnte zumindest teilweise einstückig und vorzugsweise einteilig mit dem Gehäuse und/oder der Optikeinheit ausgebildet sein. Insbesondere könnten die Befestigungseinheit und das Gehäuse und/oder die Optikeinheit zumindest ein gemeinsames Bauteil aufweisen. Vorteilhaft fungiert die Befestigungseinheit als Aufsatz, welcher dazu vorgesehen ist, eine reversible Befestigung der Optikeinheit und/oder des Gehäuses mit dem Bildaufnehmer bereitzustellen. Besonders bevorzugt könnte die Befestigungseinheit als ein Adapter verwendet werden und ermöglichen, dass die Optikeinheit an vielen verschiedenen Bildaufnehmern fixierbar ist.

Die Erfindung betrifft ferner ein Verfahren zur Verwendung einer passiven Vorsatzoptik, mit einem Codelese- und/oder Codeverifikationsgerät, wobei ein Abbildungsstrahlengang des Codelese- und/oder Codeverifikationsgeräts durch die passive Vorsatzoptik geändert wird. Dadurch kann eine Effizienz und/oder eine Flexibilität und/oder ein Komfort, hinsichtlich einer Änderung eines Abbildungsstrahlengangs, gesteigert werden.

Die passive Vorsatzoptik soll hierbei nicht auf die oben beschriebene Anwendung und Ausführungsform beschränkt sein. Insbesondere kann die passive Vorsatzoptik zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind mehrere Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 ein als Codelese- und/oder Codeverifikationssystem ausgebildetes System mit einem Bildaufnehmer und einer Vorsatzoptik,
Fig. 2 eine modular ausgebildete Vorsatzoptik,
Fig. 3 eine Schnittdarstellung des Systems in einem montierten Zustand der Vorsatzoptik,
Fig. 4 ein schematisch dargestelltes Verfahren zur Verwendung der Vorsatzoptik,
Fig. 5 eine Detailansicht einer alternativen Halteeinheit einer Vorsatzoptik,
Fig. 6 die alternative Halteeinheit in einem unmontierten Zustand eines Lichtleiters einer Lichteinheit der Vorsatzoptik,
Fig. 7 eine Rückansicht der alternativen Halteeinheit in dem unmontierten Zustand des Lichtleiters,
Fig. 8 eine Detailansicht des Lichtleiters,
Fig. 9 eine Schnittdarstellung eines alternativen Systems in einem montierten Zustand der Vorsatzoptik an einem Bildaufnehmer des Systems
Fig. 10 eine Detailansicht einer alternativen Ausführung eines Lichtleiters einer Lichteinheit einer Vorsatzoptik,
Fig. 11 eine weitere Detailansicht der alternativen Ausführung des Lichtleiters,
Fig. 12 eine weitere Detailansicht einer weiteren alternativen Halteeinheit einer Vorsatzoptik,
Fig. 13 eine Schnittdarstellung eines weiteren alternativen Systems in einem montierten Zustand der Vorsatzoptik,
Fig. 14 eine weitere Detailansicht einer weiteren alternativen Halteeinheit einer Vorsatzoptik,
Fig. 15 die weitere alternative Halteeinheit in einer geschnittenen Ansicht,
Fig. 16 eine Schnittdarstellung eines weiteren alternativen Systems in einem montierten Zustand der Vorsatzoptik,
Fig. 17 ein weiteres alternatives System mit einem Bildaufnehmer und einer alternativen Vorsatzoptik in einem unmontierten Zustand,
Fig. 18 eine Schnittdarstellung des Systems in dem unmontierten Zustand,
Fig. 19 die alternative Vorsatzoptik in einer Draufsicht,
Fig. 20 eine Schnittdarstellung einer Seitenansicht der alternativen Vorsatzoptik und
Fig. 21 eine weitere Schnittdarstellung einer weiteren Seitenansicht der alternativen Vorsatzoptik.

### Beschreibung der Ausführungsbeispiele

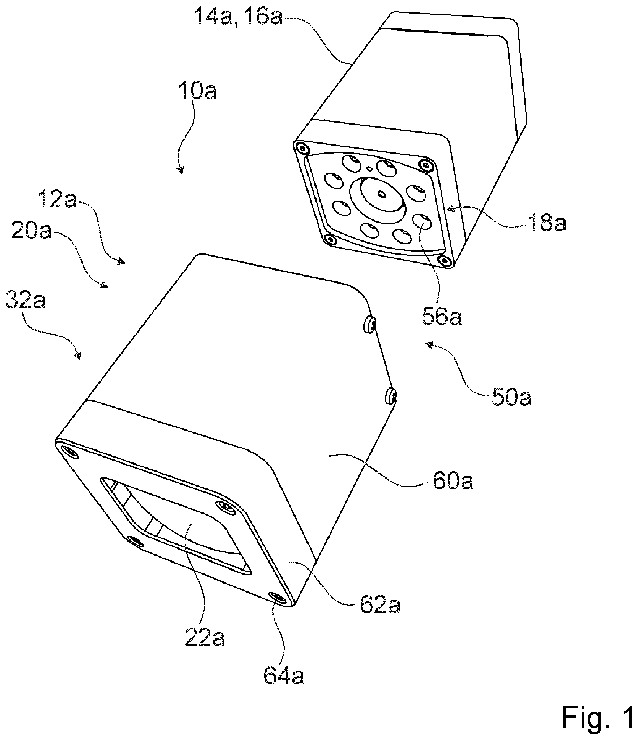

Die Figur 1 zeigt ein als Codelese- und/oder Codeverifikationssystem ausgebildetes System 10a mit einem aus dem Stand der Technik bekannten als Codelese- und/oder Codeverifikationsgerät 16a ausgebildeten Bildaufnehmer 14a. Das System 10a weist eine Vorsatzoptik 12a auf, welche als passive Vorsatzoptik 12a ausgebildet ist.

Der Bildaufnehmer 14a weist eine Lichtquelleneinheit 18a auf. Die Lichtquelleneinheit 18a weist Lichtquellen 56a auf, welche jeweils in Form eines ebenen Kreises an der Lichtquelleneinheit 18a angeordnet sind. Sämtliche der Lichtquellen 56a sind parallel zueinander ausgerichtet. Die Lichtquellen 56a sind identisch zueinander ausgebildet, weshalb lediglich eine der Lichtquellen 56a mit einem Bezugszeichen versehen ist und im Folgenden genauer beschrieben wird. Die Lichtquelleneinheit 18a stellt Licht zur Beleuchtung eines Beleuchtungsbereichs 31a bereit. Sämtliche der Lichtquellen 56a sind individuell schaltbar und/oder ansteuerbar. Zusätzlich sind die Lichtquellen 56a in zumindest einer Gruppe schaltbar und/oder ansteuerbar.

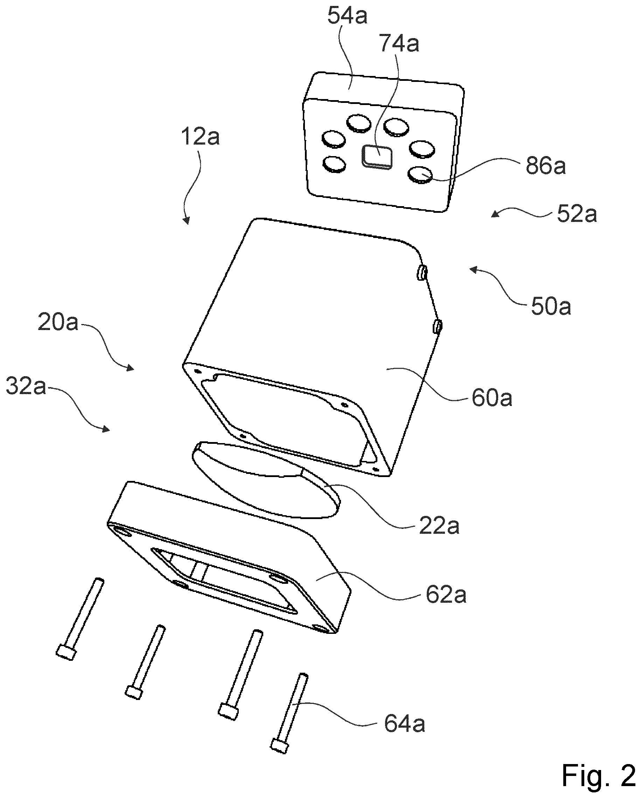

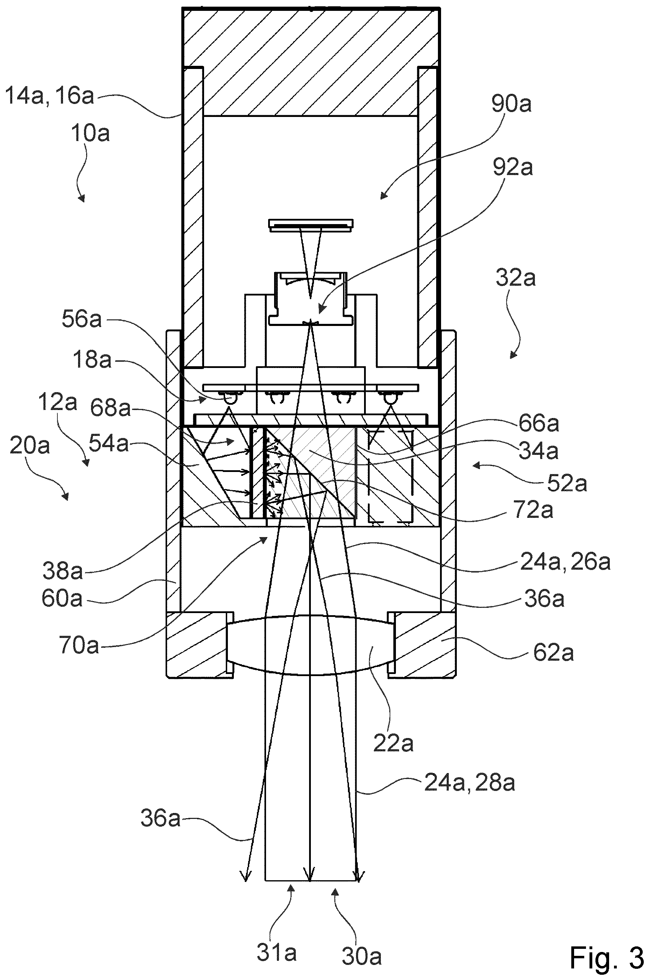

Im Gegensatz zu der Figur 1, welche einen unmontierten Zustand der Vorsatzoptik 12a darstellt, zeigt die Figur 3 einen montierten Zustand der Vorsatzoptik 12a, wobei die Vorsatzoptik 12a an dem Bildaufnehmer 14a montiert ist. Hierbei handelt es sich bei der Figur 3 um eine Schnittdarstellung des Systems 10a. Der Figur 2 ist zu entnehmen, dass die Vorsatzoptik 12a modular aufgebaut ist.

Die Vorsatzoptik 12a ist zur Verwendung mit der Lichtquelleneinheit 18a des Bildaufnehmers 14a vorgesehen. Die Vorsatzoptik 12a weist eine Optikeinheit 20a auf. Die Optikeinheit 20a weist eine Linse 22a auf und ist zur Änderung eines Abbildungsstrahlengangs 24a des Bildaufnehmers 14a vorgesehen (vgl. Figur 3). Zur abnehmbaren Befestigung der Optikeinheit 20a an dem Bildaufnehmer 14a weist die Vorsatzoptik 12a eine Befestigungseinheit 50a auf. Die Befestigungseinheit 50a ist als ein Teil der Optikeinheit 20a ausgebildet und fungiert vorliegend als ein Aufsatz zum Aufsetzen auf den Bildaufnehmer 14a. In dem montierten Zustand fixiert die Befestigungseinheit 50a die Optikeinheit 20a an dem Bildaufnehmer 14a (vgl. Figur 3). Die Vorsatzoptik 12a weist ein Gehäuse 60a auf. Vorliegend ist an dem Gehäuse 60a eine Linsenaufnahmeeinheit 62a der Optikeinheit 20a kraft- und formschlüssig mittels Schrauben 64a der Vorsatzoptik 12a fixiert. Hierbei weist die Vorsatzoptik 12a mehrere Schrauben zur Fixierung der Linsenaufnahmeeinheit 62a an dem Gehäuse 60a auf, welche identisch zueinander ausgebildet sind und demzufolge lediglich eine der Schrauben mit einem Bezugszeichen versehen ist. Die Linsenaufnahmeeinheit 62a ist zur Aufnahme der Linse 22a vorgesehen. In dem montierten Zustand nimmt die Linsenaufnahmeeinheit 62a die Linse 22a auf und fixiert die Linse 22a (vgl. Figuren 2 und 3).

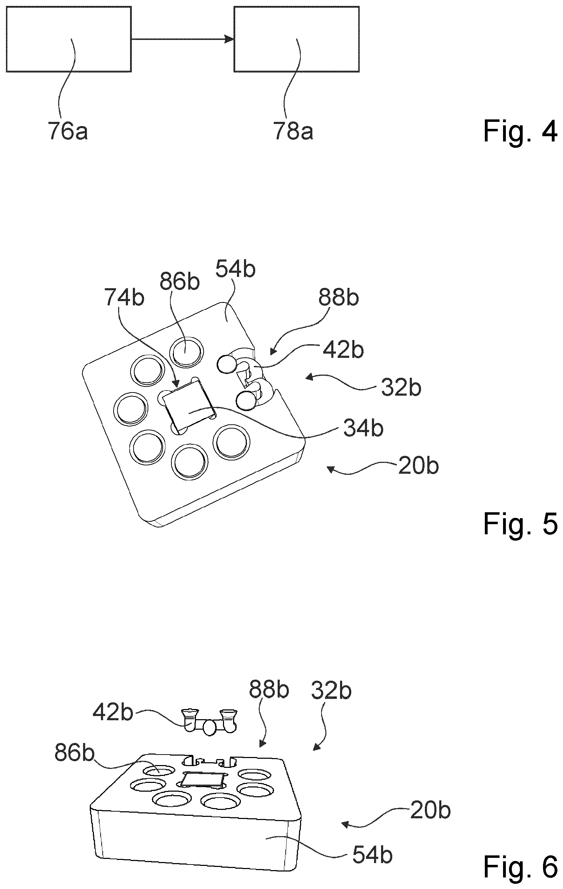

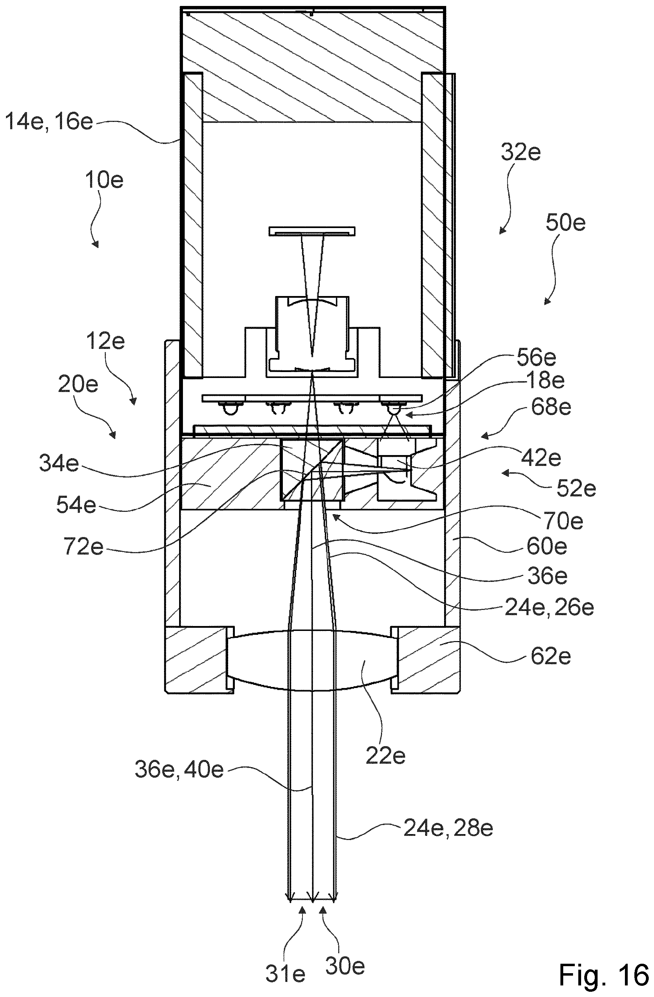

Der Figur 2 ist zu entnehmen, dass die Optikeinheit 20a eine Halteeinheit 54a aufweist. Die Halteeinheit 54a ist in das Gehäuse 60a einsetzbar. In dem montierten Zustand ist die Halteeinheit 54a mit einer Kopplungseinheit 52a der Optikeinheit 20a koppelbar und zwar derart, dass die Kopplungseinheit 52a die Halteeinheit 54a in dem Gehäuse 60a fixiert (vgl. Figur 3). Die Kopplungseinheit 52a ist an einer Innenwandung des Gehäuses 60a angeordnet. Vorliegend weist die Vorsatzoptik 12a einen Satz von Halteeinheiten 54a auf, wobei die Optikeinheit 20a eine Kopplungseinheit 52a aufweist und die Halteeinheiten 54a des Satzes von Halteeinheiten 54a untereinander austauschbar und mit der Kopplungseinheit 52a verbindbar sind. Den Figuren 5 bis 16 sind jeweils unterschiedliche Ausführungen der Halteeinheit 54a zu entnehmen. Die Vorsatzoptik 12a ist zumindest dahingehend modular aufgebaut, dass zur Verwendung mit der Lichtquelleneinheit 18a des Bildaufnehmers 14a die Halteeinheit 54a anpassbar ist. Die Vorsatzoptik 12a ist für unterschiedliche Aufnahmebedingungen anpassbar (vgl. Figur 2). Die Halteeinheit 54a könnte zumindest eine Ausnehmung 86a aufweisen, welche insbesondere dazu vorgesehen ist, eine Durchlassverbindung für das von der Lichtquelleneinheit 18a bereitgestellte Licht zu bilden.

Die Vorsatzoptik 12a weist einen Lichtaufnahmebereich 68a auf, welcher dazu vorgesehen ist, das von der Lichtquelleneinheit 18a bereitgestellte Licht aufzunehmen. Zudem weist die Vorsatzoptik 12a einen Lichtbearbeitungsbereich 70a auf, welcher das bereitgestellte Licht bearbeitet. Der Lichtbearbeitungsbereich 70a ist entlang eines Beleuchtungsstrahlengangs 36a des bereitgestellten Lichts nach dem Lichtaufnahmebereich 68a angeordnet (vgl. Figur 3).

Die Figur 3 zeigt, dass die Linse 22a dazu vorgesehen ist, einen divergenten Abbildungsstrahlengang 26a des Bildaufnehmers 14a in einen zumindest im Wesentlichen telezentrischen Abbildungsstrahlengang 28a zu ändern, welcher einen Abbildungsbereich 30a definiert. Eine Detektoreinheit 90a des Bildaufnehmers 14a ist zur Aufnahme einer Abbildung aus dem Abbildungsbereich 30a mittels des Abbildungsstrahlengangs 24a vorgesehen. Hierbei befindet sich eine Eintrittspupille 92a des Bildaufnehmers 14a in einer Brennebene der Linse 22a.

Vorliegend liegt der Abbildungsbereich 30a innerhalb des Beleuchtungsbereichs 31a (vgl. Figur 3).

Um eine Beleuchtung des Abbildungsbereichs 30a bereitzustellen, weist die Vorsatzoptik 12a eine Lichteinheit 32a auf, welche dazu vorgesehen ist, das bereitgestellte Licht von zumindest der Lichtquelleneinheit 18a des Bildaufnehmers 14a in Richtung des Abbildungsbereichs 30a umzulenken. Das bereitgestellte Licht kommt vorliegend aus der Lichtquelle 56a, könnte alternativ jedoch auch aus mehreren Lichtquellen 56a kommen. Die Halteeinheit 54a ist dazu vorgesehen, zumindest Teile der Lichteinheit 32a zu halten. Vorliegend weist die Lichteinheit 32a einen Strahlteiler 34a auf, welcher zur Ausrichtung zumindest eines Beleuchtungsstrahlengangs 36a des bereitgestellten Lichts vorgesehen ist. Der Strahlteiler 34a ist als ein Strahlteilerwürfel ausgebildet. Der Strahlteiler 34a weist einen halbdurchlässigen Spiegel 72a auf, welcher eine Diagonalfläche des Strahlteilerwürfels bildet. Der Strahlteiler 34a ist in einen Aufnahmebereich 74a der Halteeinheit 54a eingesetzt (vgl. Figur 2 und 3).

In dieser beispielhaften Ausführung weist die Lichteinheit 32a einen Diffusor 38a auf (vgl. Figur 3). Der Diffusor 38a ist entlang des Beleuchtungsstrahlengangs 36a vor dem Strahlteiler 34a angeordnet. In dieser Ausführung weist die Lichteinheit 32a die Linse 22a auf und der Strahlteiler 34a leitet den Beleuchtungsstrahlengang durch die Linse 22a (vgl. Figur 3). Um eine Umlenkung des bereitgestellten Lichts und/oder Falschlicht zu vermeiden, weist die Lichteinheit 32a ein Absorptionselement 66a auf. Hierbei ist das Absorptionselement 66a als eine Beschichtung einer Seitenfläche des Strahlteilers 34a ausgebildet.

Ein in Figur 4 dargestelltes schematisches Ablaufdiagramm eines Verfahrens zur Verwendung der Vorsatzoptik 12a mit dem Bildaufnehmer 14a weist einen ersten Verfahrensteilschritt 76a und einen zweiten Verfahrensteilschritt 78a auf. In dieser beispielhaften Ausführungsform wird der zweite Verfahrensteilschritt 78a hinsichtlich eines zeitlichen Verlaufs nach dem ersten Verfahrensteilschritt 76a durchgeführt. Im ersten Verfahrensteilschritt 76a wird die Vorsatzoptik 12a an dem Bildaufnehmer 14a fixiert. In dem zweiten Verfahrensteilschritt 78a wird der Abbildungsstrahlengang 24a des Bildaufnehmers 14a durch die Vorsatzoptik 12a geändert.

In den Figuren 5 bis 21 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleichbleibender Bauteile, Merkmale und Funktionen, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a in den Bezugszeichen des Ausführungsbeispiels in den Figuren 1 bis 4 nachgestellt und durch die Buchstaben b und f in den Bezugszeichen der Ausführungsbeispiele der Figuren 5 bis 21 ersetzt.

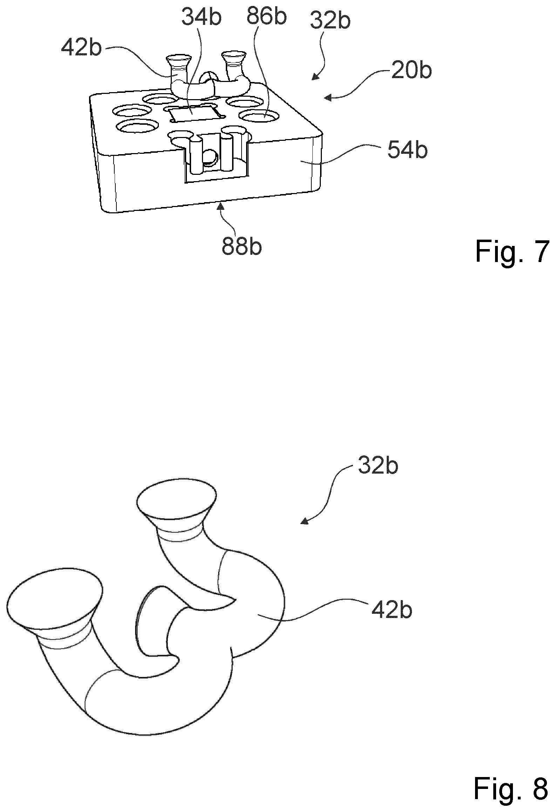

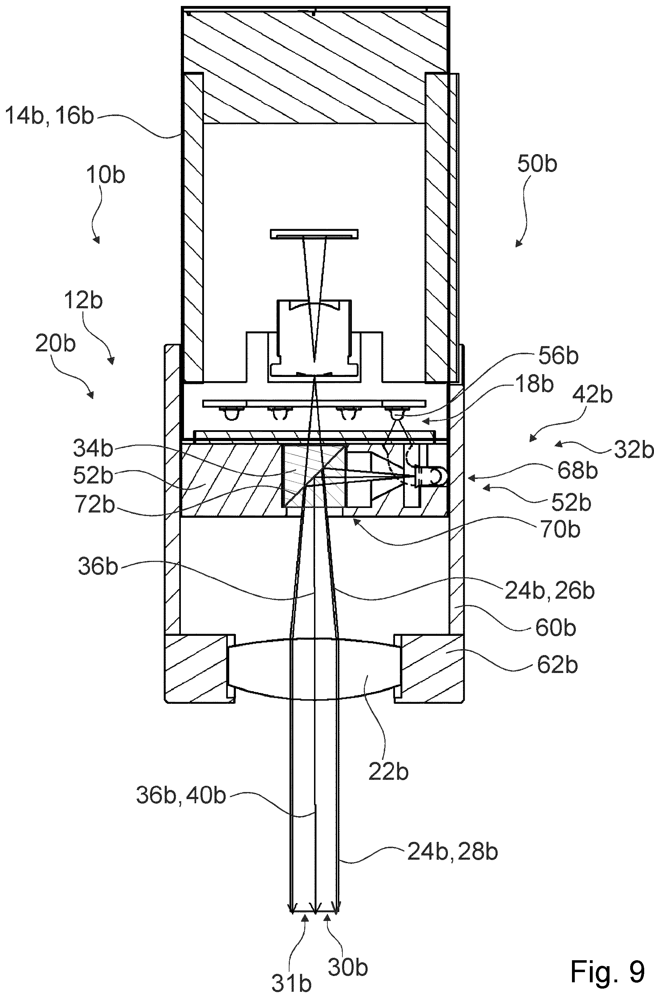

Die Figuren 5 bis 7 zeigen jeweils eine Detailansicht einer alternativen Halteeinheit 54b einer Optikeinheit 20b. Hierbei weist eine Lichteinheit 32b einer Vorsatzoptik 12b einen Lichtleiter 42b auf, welcher dazu vorgesehen ist, bereitgestelltes Licht von einer Lichtquelleneinheit 18b eines Bildaufnehmers 14b zumindest abschnittsweise zu einem Abbildungsbereich 30b zu führen (vgl. Figur 9). Die Halteeinheit 54b weist eine Öffnung 88b auf, in welche der Lichtleiter 32b einsetzbar ist (vgl. Figuren 5 bis 7). Der Lichtleiter 42b ist ein gebogenes Element zur Leitung von dem bereitgestellten Licht (vgl. Figur 8). Vorliegend ist die Lichteinheit 32b und/oder der Lichtleiter 42b dazu vorgesehen, einen telezentrischen Beleuchtungsstrahlengang 40b des bereitgestellten Lichts bereitzustellen (vgl. Figur 9). Der telezentrische Beleuchtungsstrahlengang 40b verläuft parallel zu einem telezentrischen Abbildungsstrahlengang 28b.

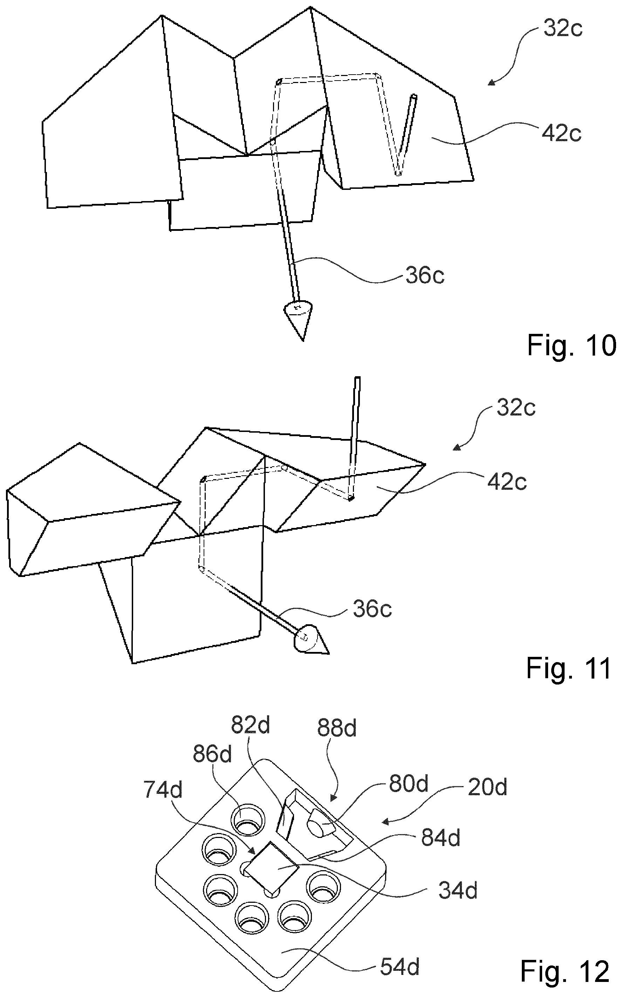

Die Figuren 10 und 11 zeigen eine alternative Ausgestaltung eines Lichtleiters 42c einer Lichteinheit 32c. Vorliegend ist der Lichtleiter 42c kantig geformt und leitet das bereitgestellte Licht entlang des eingezeichneten Beleuchtungsstrahlengangs 36c.

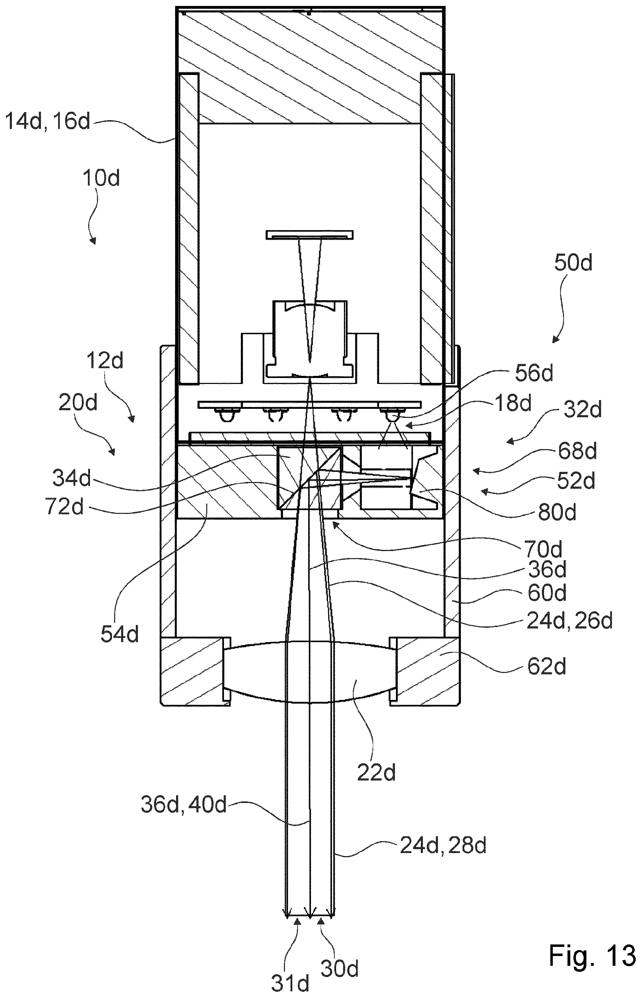

Zudem zeigen die Figuren 12 und 13 eine alternative Halteeinheit 54d einer alternativen Optikeinheit 20d einer Vorsatzoptik 12d sowie ein alternatives System 10d mit der Vorsatzoptik 12d und einem Bildaufnehmer 14d in einem montierten Zustand. In dieser beispielhaften Ausführung weist die Halteeinheit 54d anstelle eines Lichtleiters 42d einer Lichteinheit 32d eine diffus reflektierende Fläche 80d auf. Zu einer Verstärkung einer Lichtmenge eines diffus reflektierenden Lichts von der diffus reflektierenden Fläche 80d weist die Halteeinheit 54d eine erste Reflexionsfläche 82d auf. Vorliegend weist die Halteeinheit 54d zumindest eine der ersten Reflexionsfläche 82d gegenüberliegende zweite Reflexionsfläche 84d auf.

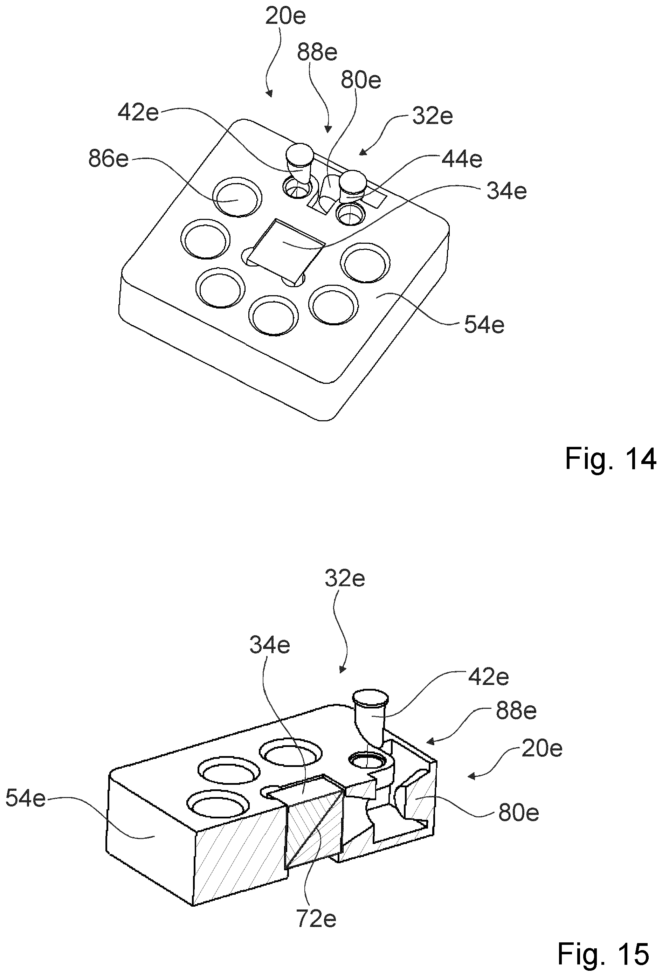

Für eine noch stärkere Beleuchtung zeigen die Figuren 14 bis 16 eine weitere Ausgestaltung einer alternativen Halteeinheit 54e einer alternativen Optikeinheit 20e einer Vorsatzoptik 12e, wobei eine Lichteinheit 32e der Vorsatzoptik 12e zumindest einen Lichtleiter 42e und einen weiteren Lichtleiter 44e aufweist. Der Lichtleiter 42e und der weitere Lichtleiter 44e sind zur Beleuchtung einer diffus reflektierenden Fläche 80e vorgesehen (vgl. Figuren 14 und 15).

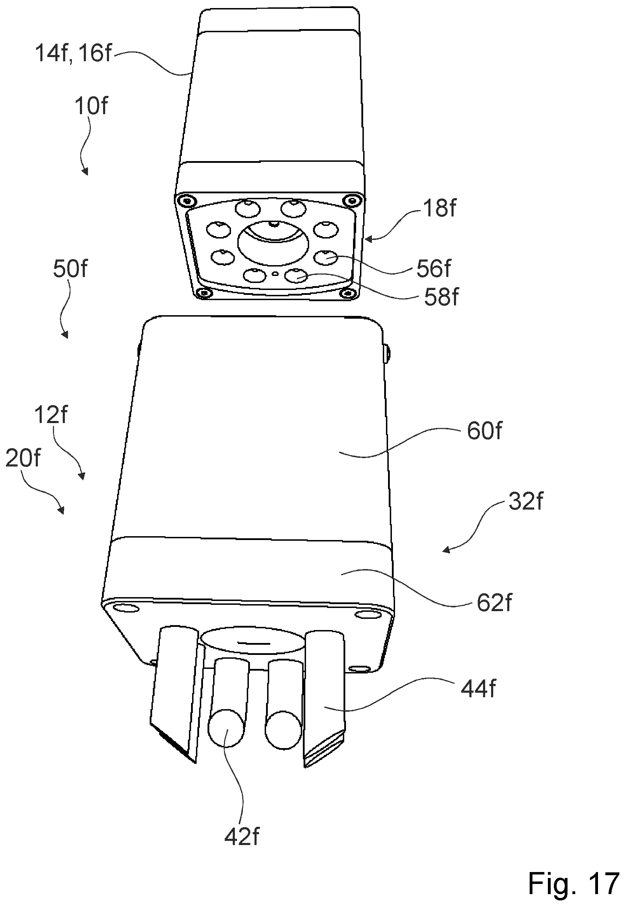

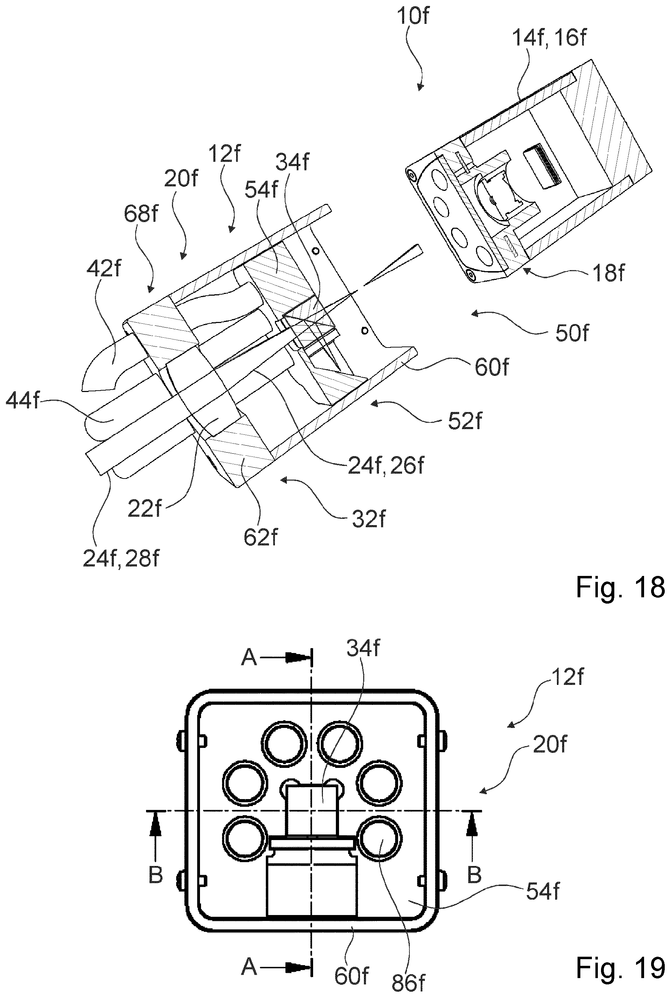

Den Figuren 17 bis 21 ist jeweils eine weitere alternative Ausführung einer Vorsatzoptik 12f zu entnehmen, wobei die Figuren 17 und 18 ein als alternatives Codelese- und/oder Codeverifikationssystem ausgebildetes System 10f zeigen.

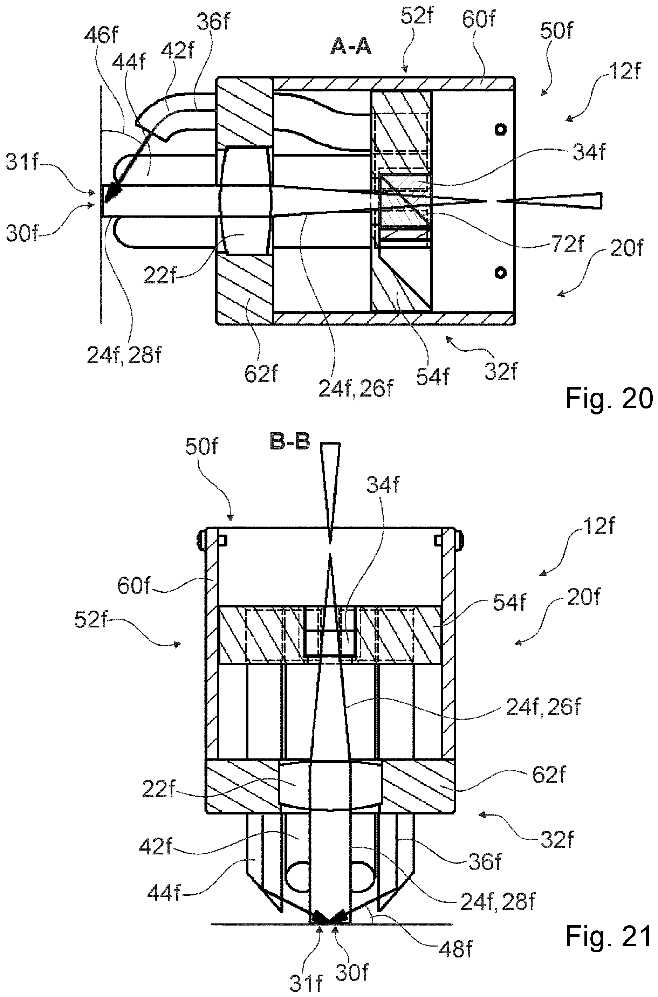

Hierbei ist ein Lichtleiter 42f einer Lichteinheit 32f der Vorsatzoptik 12f dazu vorgesehen, das bereitgestellte Licht unmittelbar in einen Abbildungsbereich 30f zu entlassen (vgl. Figuren 20 und 21). Der Lichtleiter 42f entlässt das bereitgestellte Licht unter einem Einfallswinkel 46f in den Abbildungsbereich 30f.

Zudem weist die Lichteinheit 32f einen weiteren Lichtleiter 44f auf, welcher dazu vorgesehen ist, das bereitgestellte Licht zumindest abschnittsweise zum Abbildungsbereich 30f zu führen. Hierbei leitet der weitere Lichtleiter 44f das Licht von einer weiteren Lichtquelle 58f der Lichtquelleneinheit 18f. Die weitere Lichtquelle 58f ist identisch zu der Lichtquelle 56f ausgebildet. Der weitere Lichtleiter 44f entlässt das bereitgestellte Licht unmittelbar in den Abbildungsbereich 30f. Vorliegend stellen der Lichtleiter 42f und der weitere Lichtleiter 44f das Licht mit unterschiedlichen Einfallswinkeln 46f, 48f in dem Abbildungsbereich 30f bereit. Die Figur 21 zeigt, dass ein weiterer Einfallswinkel 48f des bereitgestellten Lichts kleiner ist als der Einfallswinkel 46f.

### Bezugszeichen

10 System
12 Vorsatzoptik
14 Bildaufnehmer
16 Codelese- und/oder Codeverifikationsgerät
18 Lichtquelleneinheit
20 Optikeinheit
22 Linse
24 Abbildungsstrahlengang
26 Abbildungsstrahlengang
28 Abbildungsstrahlengang
30 Abbildungsbereich
31 Beleuchtungsbereich
32 Lichteinheit
34 Strahlteiler
36 Beleuchtungsstrahlengang
38 Diffusor
40 Beleuchtungsstrahlengang
42 Lichtleiter
44 Weiterer Lichtleiter
46 Einfallswinkel
48 Einfallswinkel
50 Befestigungseinheit
52 Kopplungseinheit
54 Halteeinheit
56 Lichtquelle
58 Lichtquelle
60 Gehäuse
62 Linsenaufnahmeeinheit
64 Schraube
66 Absorptionselement
68 Lichtaufnahmebereich
70 Lichtbearbeitungsbereich
72 Halbdurchlässiger Spiegel
74 Aufnahmebereich
76 Verfahrensteilschritt
78 Verfahrensteilschritt
80 Diffus reflektierende Fläche
82 Reflexionsfläche
84 Reflexionsfläche
86 Ausnehmung
88 Öffnung
90 Detektoreinheit
92 Eintrittspupille

## Patentansprüche

1. Passive Vorsatzoptik (12a-f) zur Verwendung mit zumindest einer Lichtquelleneinheit (18a-f) eines Codelese- und/oder Codeverifikationsgeräts (16a-f),
mit einer Optikeinheit (20a-f), welche zumindest eine Linse (22a-f) zur Änderung eines Abbildungsstrahlengangs (24a-f) des Codelese- und/oder Codeverifikationsgeräts (16a-f) aufweist, wobei die Linse (22a-f) dazu vorgesehen ist, einen divergenten Abbildungsstrahlengang (26a-f) des Codelese- und/oder Codeverifikationsgeräts (16a-f) in einen zumindest im Wesentlichen telezentrischen Abbildungsstrahlengang (28a-f) zu ändern, welcher einen Abbildungsbereich (30a-f) definiert,
und mit einer Lichteinheit (32a-f), welche dazu vorgesehen ist, von zumindest der Lichtquelleneinheit (18a-f) des Codelese- und/oder Codeverifikationsgeräts (16a-f) bereitgestelltes Licht in Richtung des Abbildungsbereichs (30a-f) umzulenken.

2. Passive Vorsatzoptik (12a-e) nach Anspruch 1, **dadurch gekennzeichnet, dass** die Lichteinheit (32a-e) einen Strahlteiler (34a-e) aufweist, welcher zur Ausrichtung zumindest eines Beleuchtungsstrahlengangs (36a-e) des bereitgestellten Lichts vorgesehen ist.

3. Passive Vorsatzoptik (12a-e) nach Anspruch 2, **dadurch gekennzeichnet, dass** die Lichteinheit (32a-e) die Linse (22a-e) aufweist und der Strahlteiler (34a-e) den Beleuchtungsstrahlengang durch die Linse (22a-e) leitet.

4. Passive Vorsatzoptik (12a) nach einem der Ansprüche 2 oder 3, **dadurch gekennzeichnet, dass** die Lichteinheit (32a) einen Diffusor (38a) aufweist, welcher entlang des Beleuchtungsstrahlengangs (36a) vor dem Strahlteiler (34a) angeordnet ist.

5. Passive Vorsatzoptik (12b-e) nach einem der vorhergehenden Ansprüche, **dadurch gekennzeichnet, dass** die Lichteinheit (32b-e) dazu vorgesehen ist, einen zumindest im Wesentlichen telezentrischen Beleuchtungsstrahlengang (40b-e) bereitzustellen.

6. Passive Vorsatzoptik (12b-f) nach einem der vorhergehenden Ansprüche, **dadurch gekennzeichnet, dass** die Lichteinheit (32b-f) einen Lichtleiter (42b-f) aufweist, welcher dazu vorgesehen ist, das bereitgestellte Licht zumindest abschnittsweise zum Abbildungsbereich (30b-f) zu führen.

7. Passive Vorsatzoptik (12f) nach Anspruch 6, **dadurch gekennzeichnet, dass** der Lichtleiter (42f) dazu vorgesehen ist, das bereitgestellte Licht unmittelbar in den Abbildungsbereich (30f) zu entlassen.

8. Passive Vorsatzoptik (12f) nach Anspruch 6 oder 7, **dadurch gekennzeichnet, dass** die Lichteinheit (32f) einen weiteren Lichtleiter (44f) aufweist, welcher dazu vorgesehen ist, das bereitgestellte Licht zumindest abschnittsweise zum Abbildungsbereich (30f) zu führen.

9. Passive Vorsatzoptik (12f) nach Anspruch 8, **dadurch gekennzeichnet, dass** der Lichtleiter (42f) und der weitere Lichtleiter (44f) Licht mit unterschiedlichen Einfallswinkeln (46f, 48f) in dem Abbildungsbereich (30f) bereitstellen.

10. Passive Vorsatzoptik (12a-f) nach einem der vorhergehenden Ansprüche, **gekennzeichnet durch** eine Befestigungseinheit (50a-f) zur insbesondere abnehmbaren Befestigung der Optikeinheit (20a-f) an dem Codelese- und/oder Codeverifikationsgerät (16a-f).

11. Passive Vorsatzoptik (12a-e) nach einem der vorhergehenden Ansprüche, **gekennzeichnet durch** einen Satz von Halteeinheiten (54a-e), welche jeweils zumindest Teile einer Lichteinheit (32a-e) nach einem der Ansprüche 1 bis 9 halten, wobei die Optikeinheit (20a- e) eine Kopplungseinheit (52a-e) aufweist und die Halteeinheiten (54a-e) des Satzes von Halteeinheiten (54a-e) untereinander austauschbar und mit der Kopplungseinheit (52a-e) verbindbar sind.

12. Codelese- und/oder Codeverifikationssystem, mit zumindest einer passiven Vorsatzoptik (12a-f) nach einem der vorhergehenden Ansprüche und mit dem Codelese- und/oder Codeverifikationsgerät (16a-f).

13. Verfahren zur Verwendung einer passiven Vorsatzoptik (12a-f) nach einem der Ansprüche 1 bis 11 mit einem Codelese- und/oder Codeverifikationsgerät (16a-f), wobei ein Abbildungsstrahlengang (24a-f) des Codelese- und/oder Codeverifikationsgeräts (16a-f) durch die passive Vorsatzoptik (12a-f) geändert wird.

## Claims

1. A passive attachment optics (12a-f) for use with at least one light source unit (18a-f) of a code reading and/or code verification device (16a-f),
comprising an optics unit (20a-f) having at least one lens (22a-f) for changing an imaging beam path (24a-f) of the code reading and/or code verification device (16a-f), the lens (22a-f) being configured to change a divergent imaging beam path (26a-f) of the code reading and/or code verification device (16a-f) to an at least substantially telecentric imaging beam path (28a-f) that defines an imaging area (30a-f),
and comprising a lighting unit (32a-f) configured to deflect light provided by at least the light source unit (18a-f) of the code reading and/or code verification device (16a-f) in the direction of the imaging area (30a-f).

2. The passive attachment optics (12a-e) of claim 1, **characterized in that** the lighting unit (32a-e) includes a beam splitter (34a-e) configured to orient at least one illuminating beam path (36a-e) of the light provided.

3. The passive attachment optics (12a-e) of claim 2, **characterized in that** the lighting unit (32a-e) includes the lens (22a-e) and that the beam splitter (34a-e) directs the illuminating beam path through the lens (22a-e).

4. The passive attachment optics (12a) of claim 2 or 3, **characterized in that** the lighting unit (32a) includes a diffusor (38a) arranged along the illuminating beam path (36a) in front of the beam splitter (34a).

5. The passive attachment optics (12b-e) of any one of the preceding claims, **characterized in that** the lighting unit (32b-e) is configured to provide an at least substantially telecentric illuminating beam path (40b-e).

6. The passive attachment optics (12b-f) of any one of the preceding claims, **characterized in that** the lighting unit (32b-f) comprises a light guide (42b-f) configured to direct the light provided to the imaging area (30b-f) at least in portions.

7. The passive attachment optics (12f) of claim 6, **characterized in that** the light guide (42f) is configured to release the light provided directly into the imaging area (30f).

8. The passive attachment optics (12f) of claim 6 or 7, **characterized in that** the lighting unit (32f) includes a further light guide (44f) configured to guide the light provided to the imaging area (30f) at least in portions.

9. The passive attachment optics (12f) of claim 8, **characterized in that** the light guide (42f) and the further light guide (44f) provide light with different incident angles (46f, 48f) in the imaging area (30f).

10. The passive attachment optics (12a-f) of any one of the preceding claims, **characterized by** a fastening unit (50a-f) for, in particular detachably, fastening the optics unit (20a-f) to the code reading and/or code verification device (16a-c).

11. The passive attachment optics (12a-e) of any one of the preceding claims, **characterized by** a set of holding units (54a-e), each holding at least parts of a lighting unit (32a-e) of any one of claims 1 to 9, wherein the optics unit (20a-e) includes a coupling unit (52a-e) and the holding units (54a-e) of the set of holding units (54a-e) are interchangeable with one another and connectable to the coupling unit (52a-e).

12. A code reading and/or code verification system comprising at least one passive attachment optics (12a-f) of any one of the preceding claims and comprising the code reading and/or code verification device (16a-c).

13. A method for using the passive attachment optics (12a-f) of any one of claims 1 to 11 with a code reading and/or code verification device (16a-f), wherein an imaging beam path (24a-f) of the code reading and/or code verification device (16a-f) is changed by the passive attachment optics (12a-f).

## Revendications

1. Optique additionnelle passive (12a-f) destinée à être utilisée avec au moins une unité de source lumineuse (18a-f) d'un appareil de lecture de code et/ou de vérification de code (16a-f), comportant
une unité optique (20a-f) qui comprend au moins une lentille (22a-f) pour modifier un trajet de rayons de formation d'image (24a-f) de l'appareil de lecture de code et/ou de vérification de code (16a-f), la lentille (22a-f) étant prévue pour modifier un trajet de rayons de formation d'image divergent (26a-f) de l'appareil de lecture de code et/ou de vérification de code (16a-f) en un trajet de rayons de formation d'image au moins sensiblement télécentrique (28a-f) qui définit une zone de formation d'image (30a-f),
et une unité d'éclairage (32a-f) qui est prévue pour dévier la lumière fournie par au moins l'unité de source lumineuse (18a-f) de l'appareil de lecture de code et/ou de vérification de code (16a-f) en direction de la zone de formation d'image (30a-f).

2. Optique additionnelle passive (12a-e) selon la revendication 1, **caractérisée en ce que** l'unité d'éclairage (32a-e) comprend un diviseur de faisceau (34a-e) qui est prévu pour orienter au moins un trajet de rayons d'éclairage (36a-e) de la lumière fournie.

3. Optique additionnelle passive (12a-e) selon la revendication 2, **caractérisée en ce que** l'unité d'éclairage (32a-e) comprend la lentille (22a-e) et **en ce que** le diviseur de faisceau (34a-e) guide le trajet de rayons d'éclairage à travers la lentille (22a-e).

4. Optique additionnelle passive (12a) selon l'une des revendications 2 ou 3, **caractérisée en ce que** l'unité d'éclairage (32a) comprend un diffuseur (38a) qui est disposé devant le diviseur de faisceau (34a) le long du trajet de rayons d'éclairage (36a).

5. Optique additionnelle passive (12b-e) selon l'une quelconque des revendications précédentes, **caractérisée en ce que** l'unité d'éclairage (32b-e) est prévue pour fournir un trajet de rayons d'éclairage (40b-e) au moins sensiblement télécentrique.

6. Optique additionnelle passive (12b-f) selon l'une quelconque des revendications précédentes, **caractérisée en ce que** l'unité d'éclairage (32b-f) comprend un guide de lumière (42b-f) qui est prévu pour guider la lumière fournie au moins sur certaines sections vers la zone de formation d'image (30b-f).

7. Optique additionnelle passive (12f) selon la revendication 6, **caractérisée en ce que** le guide de lumière (42f) est prévu pour délivrer la lumière fournie directement dans la zone de formation d'image (30f).

8. Optique additionnelle passive (12f) selon la revendication 6 ou 7, **caractérisée en ce que** l'unité d'éclairage (32f) comprend un autre guide de lumière (44f) qui est prévu pour guider la lumière fournie au moins sur certaines sections vers la zone de formation d'image (30f).

9. Optique additionnelle passive (12f) selon la revendication 8, **caractérisée en ce que** le guide de lumière (42f) et l'autre guide de lumière (44f) fournissent de la lumière avec des angles d'incidence différents (46f, 48f) dans la zone de formation d'image (30f).

10. Optique additionnelle passive (12a-f) selon l'une quelconque des revendications précédentes, **caractérisée par** une unité de fixation (50a-f) pour la fixation, en particulier amovible, de l'unité optique (20a-f) sur l'appareil de lecture de code et/ou de vérification de code (16a-f).

11. Optique additionnelle passive (12a-e) selon l'une quelconque des revendications précédentes, **caractérisée par** un ensemble d'unités de maintien (54a-e) qui maintiennent chacune au moins des parties d'une unité d'éclairage (32a-e) selon l'une quelconque des revendications 1 à 9, l'unité optique (20a-e) comprenant une unité d'accouplement (52a-e) et les unités de maintien (54a-e) de l'ensemble d'unités de maintien (54a-e) étant interchangeables entre elles et pouvant être reliées à l'unité d'accouplement (52a-e).

12. Système de lecture de code et/ou de vérification de code, comprenant au moins une optique additionnelle passive (12a-f) selon l'une quelconque des revendications précédentes et l'appareil de lecture de code et/ou de vérification de code (16a-f).

13. Procédé d'utilisation d'une optique additionnelle passive (12a-f) selon l'une quelconque des revendications 1 à 11 avec un appareil de lecture de code et/ou de vérification de code (16a-f), dans lequel un trajet de rayons de formation d'image (24a-f) de l'appareil de lecture de code et/ou de vérification de code (16a-f) est modifié par l'optique additionnelle passive (12a-f).
